Europäisches Patentamt

European Patent Office

Office européen des brevets

(19)

(11) **EP 0 931 923 A1**

(12) **DEMANDE DE BREVET EUROPEEN**

(43) Date de publication:
**28.07.1999 Bulletin 1999/30**

(51) Int Cl.$^6$: **F02D 41/02**, F01N 3/08

(21) Numéro de dépôt: **99200098.4**

(22) Date de dépôt: **18.01.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.01.1998 FR 9800512**

(71) Demandeur: **RENAULT**
**92109 Boulogne-Billancourt (FR)**

(72) Inventeurs:
• **Beurthey, Stéphan**
**91430 Vauhallan (FR)**

• **Mollet, Jean-Claude**
**92380 Garches (FR)**
• **Cozler, Daniel**
**78570 Andresy (FR)**

(74) Mandataire: **Fernandez, Francis Lionel et al**
**Renault,**
**Technocentre,**
**S.0267 - TCR AVA 0-56,**
**1, avenue du Golf**
**78288 Guyancourt (FR)**

(54) **Procédé de commande de purge d'un pot catalytique de traitement des gaz d'échappement d'un moteur à combustion interne**

(57) Le procédé consiste à déclencher une purge par un accroissement de la richesse (R) du mélange air/carburant après avoir déterminé que le moteur (1) est en condition de coupure d'allumage, pour déstocker et réduire les oxydes d'azote stockés dans le pot catalytique (6) au moyen du mélange enrichi, sans qu'il y ait combustion de ce dernier.

Application : à un moteur à combustion interne pour la propulsion d'un véhicule.

## FIG.1

EP 0 931 923 A1

## Description

La présente invention est relative à un procédé de commande de la purge d'un pot catalytique de traitement des gaz d'échappement d'un moteur à combustion interne comprenant des moyens d'adsorption des oxydes d'azote contenus dans ces gaz, du type suivant lequel on déclenche une telle purge par un accroissement de la richesse du mélange air/carburant d'alimentation du moteur, à partir d'une richesse correspondant à un mélange pauvre ou stoechiométrique.

Pour réduire la pollution de l'atmosphère par les gaz d'échappement des moteurs à combustion interne, en particulier ceux qui assurent la propulsion de véhicules automobiles, on équipe couramment les lignes d'échappement de ces gaz d'un pot catalytique ayant pour fonction de transformer les espèces chimiques nocives contenues dans ces gaz en espèces chimiques moins nocives, voire inoffensives.

C'est ainsi que l'on connaît un pot catalytique dit "à trois voies" ou "trifonctionnel", du fait qu'il exécute une triple fonction d'oxydation des hydrocarbures imbrûlés (HC), d'oxydation du dangereux CO en $CO_2$, et de réduction des oxydes d'azote en azote gazeux. Le souci de réduire encore la pollution de l'atmosphère a provoqué de l'intérêt pour un moteur à combustion interne capable de fonctionner essentiellement avec un mélange air/carburant dit "pauvre", c'est-à-dire dont la richesse en carburant est inférieure à celle du mélange stoechiométrique. Lorsqu'on utilise un pot catalytique trifonctionnel classique pour dépolluer les gaz d'échappement d'un tel moteur fonctionnant en mélange pauvre, on observe cependant une franche perte d'efficacité du pot en ce qui concerne la réduction des oxydes d'azote (notés dans la suite NOx), qui sont particulièrement nocifs.

Pour pallier cet inconvénient, on propose dans le brevet européen n° 560 961 d'utiliser un pot catalytique trifonctionnel modifié en ce qu'il comprend des moyens d'adsorption des NOx présents dans les gaz d'échappement, lorsque le mélange air/carburant fourni au moteur est pauvre, ce qui évite de les évacuer alors dans l'atmosphère. Pour éviter que cette adsorption ne provoque, à la longue, une saturation de la capacité d'adsorption du pot en NOx, et donc une perte d'efficacité du pot de ce point de vue, le brevet européen précité propose de commander la richesse du mélange air/carburant d'alimentation du moteur de manière à commuter périodiquement la richesse de ce mélange d'une valeur correspondant à un mélange pauvre à une valeur correspondant à un mélange stoechiométrique ou surstoechiométrique, cette commutation provoquant la désorption des NOx adsorbés dans le pot puis leur réduction par les HC et le monoxyde de carbone CO alors dans le pot du fait de l'accroissement de la richesse du mélange, ces deux dernières espèces chimiques devant elles-mêmes être oxydées en espèces moins polluantes, conformément à deux des trois fonctions classiques du pot catalytique.

Cette commutation de la richesse du mélange air/carburant d'une valeur correspondant à un mélange pauvre à une valeur correspondant à un mélange riche, pour un but de dépollution des gaz d'échappement, entraîne une surconsommation de carburant fonction des moyens mis en oeuvre pour évaluer les quantités de gaz adsorbées (ou "stockées") et désorbées (ou "déstockées") par le pot ainsi que par ceux utilisés pour déclencher la purge du pot et régler la durée de cette purge.

A cet égard, on connaît de la demande de brevet européen n° 598 917 un dispositif du type évoqué ci-dessus qui développe une stratégie suivant laquelle on considère qu'en dessous d'une certaine quantité stockée de NOx, les NOx arrivant dans le pot sont complètement stockés.

La décision de purger le pot est prise sur un dépassement d'un taux de remplissage du pot en NOx. Or, la capacité d'adsorption en NOx du pot est fonction de la température du pot, non prise en compte dans cette stratégie. Egalement, la durée d'une purge est fonction seulement de la température du pot. Elle ne tient donc pas compte d'une autre variable essentielle, à savoir le débit du moteur en matières réductrices (HC, CO).

En outre, la purge du pot est effectuée en particulier lors du fonctionnement à pleine charge du moteur, ce qui diminue le couple pendant une période de fonctionnement où l'on souhaite un couple constant ou nécessite un système complexe pour maintenir le couple constant pendant cette phase de purge.

La présente invention a pour but de fournir un procédé de commande de la purge d'un pot catalytique de traitement des gaz d'échappement d'un moteur à combustion interne comprenant des moyens d'adsorption des oxydes d'azote contenus dans ces gaz, procédé qui ne présente pas les inconvénients évoqués ci-dessus des procédés de purge des pots catalytiques de ce type connus dans la technique antérieure, et qui permette en particulier de réduire encore la surconsommation due aux purges du pot en NOx par un suivi plus étroit des mécanismes de stockage et de purge.

La présente invention a également pour but de fournir un procédé de commande de la purge d'un pot catalytique de traitement des gaz d'échappement d'un moteur à combustion interne dans lequel la purge est commandée pendant la phase de fonctionnement du moteur où la demande de couple est nulle.

On atteint les buts ci-dessus, selon l'invention, en fournissant un procédé de commande de purge d'un pot catalytique de traitement des gaz d'échappement d'un moteur à combustion interne, le pot comprenant des moyens d'adsorption catalytiques des oxydes d'azote contenus dans ces gaz, suivant lequel on déclenche une telle purge par un accroissement de la richesse (R) d'un mélange air/carburant par rapport à une richesse correspondant à un mélange pauvre ou stoechiométrique et caractérisé en ce que :

(a) on détermine, lorsque le moteur fonctionne, si le moteur est en condition de coupure d'allumage (condition_coupure = on) ou en condition d'allumage (condition_coupure = off); et
(b) on déclenche une purge des moyens d'adsorption catalytiques par le mélange air/carburant enrichi, sans combustion de celui-ci, quand le moteur est en condition de coupure d'allumage (condition_coupure = on).

Dans une réalisation recommandée de l'invention, le déclenchement de la purge est également commandé lorsque l'efficacité (EFFNOX; EFFSTOCK) des moyens d'adsorption catalytiques tombe en dessous d'une valeur minimum prédéterminée (Eff_min) et que le moteur est en condition de coupure d'allumage (condition_coupure = on).
L'efficacité des moyens d'adsorption peut être l'efficacité instantanée globale EFFNOX qui est le rapport entre le débit de NOx dans les gaz d'échappement et le débit de NOx moteur. Cette efficacité instantanée globale est fonction de la température des moyens d'adsorption (Tcat) et de leurs taux de remplissage NS/NSC, ainsi que du débit de NOx du moteur où NS est la quantité de NOx adsorbée et NSC la quantité maximale de NOx que les moyens d'adsorption catalytique peuvent adsorber. La quantité maximale de NOx adsorbable par les moyens d'adsorption catalytique est tirée d'une table fonction de la température des moyens d'adsorption. La quantité de NOx adsorbée est déterminée à chaque combustion à l'aide d'une cartographie fonction du régime et de la charge du moteur permettant d'évaluer le débit de NOx sorti du moteur, lorsque celui-ci est chaud et fonctionne en mélange pauvre et d'une table fonction de la température d'eau du moteur.
En variante, l'efficacité peut être l'efficacité instantanée de stockage EFFSTOCK, telle que :

$$EFFSTOCK = \frac{EFFNOX - EFFDENOX}{1 - EFFDENOX}$$

où EFFDENOX, appelée "efficacité instantanée dénox" est le rapport entre le débit de NOx directement traité et le débit de NOx sorti du moteur, le rapport EFFDENOX étant tiré d'une table fonction de la température des moyens d'adsorption catalytiques.
On peut également utiliser les efficacités dites "moyennes" lorsque les quantités ci-dessus sont exprimées à partir des masses de NOx (au lieu des débits).
Pendant une purge, on peut également évaluer continûment, les quantités d'oxydes d'azote déstockées successivement par les moyens d'adsorption catalytique, par les quantités de carburant (réducteur) injectées successivement et on arrête la purge quand l'efficacité des moyens d'adsorption remonte au-dessus d'une valeur de seuil prédéterminée du fait des déstockages successifs.
Une caractéristique importante de l'invention est que la purge s'effectue alors que l'allumage du mélange est inhibé. Une grande quantité de carburant est alors injectée de sorte que la richesse du mélange non brûlé qui circule dans l'échappement est très élevée (entre 5 et 20). Ainsi, dans le cas d'un moteur à injection indirecte (injection dans le collecteur d'admission), il suffit d'augmenter la richesse du mélange formé dans la chambre de combustion et dans le cas d'un moteur à injection directe (injecteur dans la chambre de combustion), on peut non seulement augmenter la richesse du mélange formé dans la chambre de combustion en injectant du carburant lorsque la phase d'évacuation du mélange (échappement) n'est pas commencée, mais également pendant cette phase d'échappement. Dans ce dernier cas, une partie du carburant injecté se trouvant dans la chambre part alors directement dans l'échappement et le mélange se forme dans l'échappement.
Le procédé de l'invention est avantageux car, lorsque le moteur est en condition de coupure d'allumage, la masse d'air présente dans la chambre de combustion (cylindre) est faible. Une faible partie seulement du carburant injecté est donc perdue par réaction avec l'oxygène de l'air. On diminue ainsi la surconsommation de carburant due aux purges des moyens d'adsorption catalytiques. D'autre part, la concentration en oxygène demeure constante. Enfin, la condition de coupure d'allumage signifie que le conducteur souhaite un couple fourni par une combustion nulle et il n'est donc pas nécessaire de prévoir un système et un procédé complexes de commande du couple.
D'autres caractéristiques et avantages de la présente invention apparaîtront à la lecture de la description qui va suivre et à l'examen des figures annexées, dans lesquelles :

la figure 1 est un schéma d'un moteur à combustion interne équipé des moyens permettant d'exécuter le procédé de commande de purge suivant l'invention;
la figure 2 est un graphe montrant la relation entre les émissions à l'échappement et la richesse, lorsqu'il n'y a pas de combustion;
la figure 3 est la répartition des NOx au niveau des moyens d'adsorption catalytiques;
la figure 4 est un graphe de l'efficacité EFFSTOCK en fonction de diverses températures des moyens d'adsorption catalytiques;

la figure 5 est un graphe de la capacité de stockage maximale NSC des moyens d'adsorption catalytiques en fonction de la température de ces moyens d'adsorption catalytiques (Tcat) pour deux concentrations en NOx;
la figure 6 est un graphe de l'efficacité EFFDENOX en fonction de la température des moyens d'adsorption catalytiques (Tcat);
la figure 7 est un graphe du rapport dNS/dM de la quantité dNS de NOx déstockée par une quantité dM de carburant présente au niveau des moyens d'adsorption catalytique, en fonction du taux de remplissage à une température de 350°C; et
la figure 8, un organigramme du fonctionnement du système expert commandant le déclenchement des purges.

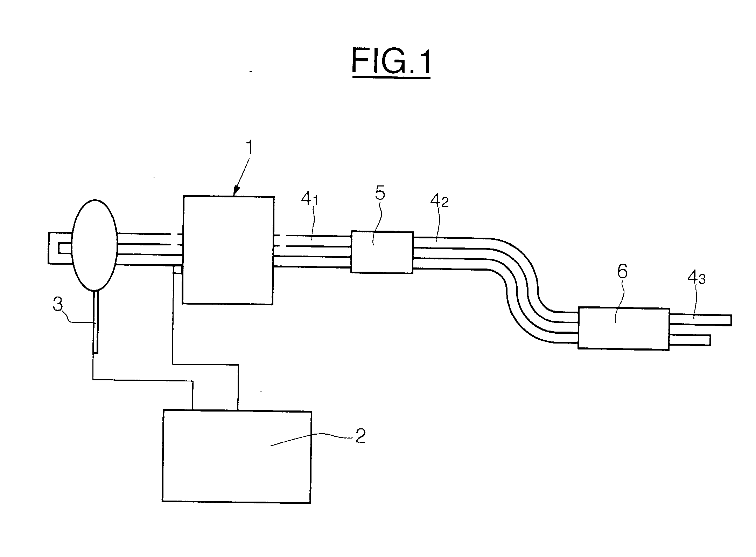

En se référant à la figure 1, on a représenté un moteur à combustion interne 1 équipé des moyens permettant d'exécuter le procédé de commande de purge suivant l'invention. Classiquement, le calculateur 2 reçoit et traite des signaux venus de divers capteurs, en particulier d'un capteur 3 de la pression P (ou du débit) de l'air admis dans le moteur 1, pour commander en particulier le temps d'ouverture $t_i$ d'injecteurs de carburant 7 dans le moteur 1. Les gaz d'échappement du moteur passent dans une ligne d'échappement $4_1$, $4_2$, $4_3$ qui traverse successivement, et dans cet ordre, un pot catalytique d'amorçage éventuel 5 et un pot catalytique trifonctionnel 6 du type de ceux évoqués dans les brevets précités, à savoir un pot comprenant des moyens d'adsorption des oxydes d'azote NOx lorsque le moteur fonctionne en mélange pauvre, ces oxydes étant désorbés, ou "déstockés", lorsque le moteur est alimenté avec un mélange air/carburant de richesse supérieure ou égale à 1 propre à laisser subsister dans les gaz d'échappement du moteur des espèces chimiques réductrices (HC, CO) susceptibles de réduire les NOx désorbés, les hydrocarbures imbrûlés HC et le CO étant eux-mêmes oxydés alors en espèces chimiques moins ou non polluantes ($CO_2$, $H_2O$, etc...). Un capteur de température fournit la température $T_{cat}$ du pot 6 au calculateur 2.

Ce calculateur numérique 2 est dûment programmé pour exécuter, outre les tâches qui lui sont classiquement confiées, le procédé suivant l'invention de commande de purge du pot catalytique 6, et de traitement cles NOx désorbés lors des purges, que l'on va décrire dans la suite.

Ce procédé fait usage de modèles pour l'évaluation des quantités d'oxydes d'azote qui sont successivement stockées par le pot, déstockées et réduites par ce pot. Il fait aussi usage d'un système expert pour commander le déclenchement et la durée des purges en fonction des évaluations tirées des modèles. On décrit successivement dans la suite ces modèles et ce système expert mis en oeuvre à l'aide de moyens logiciels incorporés au calculateur numérique 2.

Pour la modélisation du fonctionnement du pot catalytique 6, on distinguera les fonctionnements suivants :

-    fonctionnement en stockage des oxydes d'azote, appelés dans la suite "stockage des NOx", fonctionnement que l'on observe quand le moteur est alimenté en mélange pauvre,
-    fonctionnement en déstockage des oxydes d'azote, ou "déstockage des NOx", que l'on observe quand le moteur est alimenté avec un mélange riche, les NOx déstockés étant alors réduits grâce aux excès d'hydrocarbures (HC) que l'on trouve dans les gaz d'échappement du moteur du fait, dans la présente invention, de la non combustion du mélange air/carburant, et
-    fonctionnement à la stoechiométrie, où on suppose que le pot 6 ne stocke ni ne déstocke des NOx. A cet égard, il faut comprendre qu'un mélange air/carburant "stoechiométrique" d'alimentation du moteur peut cependant produire des gaz d'échappement contenant des hydrocarbures imbrûlés et du CO du fait de la combustion incomplète du mélange stoechiométrique d'entrée. Ces réducteurs peuvent alors assurer le déstockage et la réduction des NOx, tout comme un mélange "riche". C'est pourquoi on distinguera dans la suite essentiellement les mélanges air/carburant "pauvres" de richesse inférieure à 1 et les mélanges de richesse supérieure ou égale à 1.

Modèle de fonctionnement en stockage des NOx

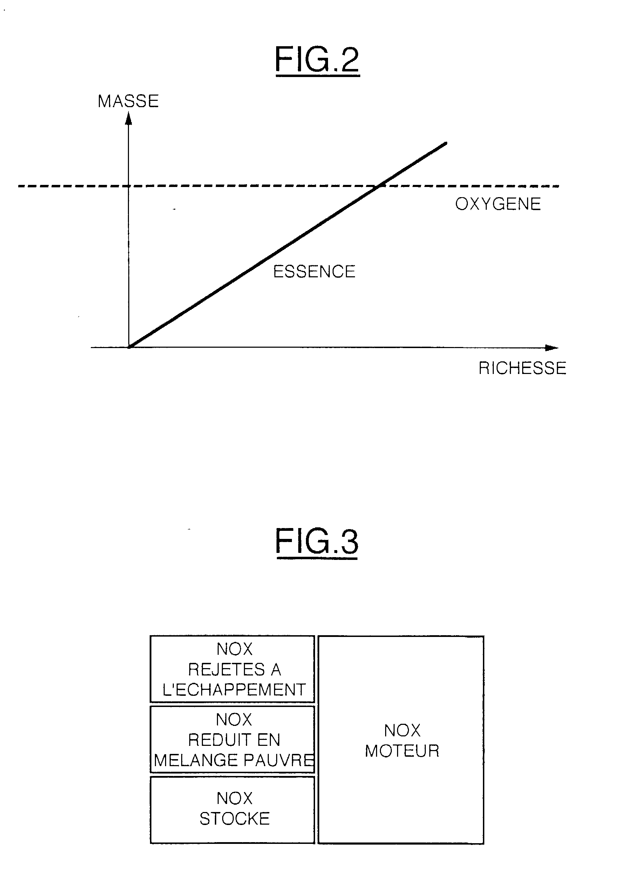

Comme le montre la figure 3, le pot 6 adsorbe alors une partie des NOx formés dans le moteur, en réduit une autre partie grâce aux éventuels hydrocarbures imbrûlés et au monoxyde de carbone et rejette clans la ligne d'échappement 4 une troisième partie de ces NOx, correspondant à des oxydes d'azote qui ne sont ni stockés, ni réduits.

Suivant la présente invention, on définit l'efficacité instantanée globale EFFNOX, l'efficacité instantanée de stockage EFFSTOCK et l'efficacité instantanée de traitement EFFDENOX du pot de la manière suivante :

$$EFFNOX = \frac{\text{débit NOx à la sortie de la ligne d'échappement}}{\text{débit NOx à la sortie du moteur 1}}$$

$$EFFDENOX = \frac{\text{débit NOx réduit dans le pot 6}}{\text{débit NOx à la sortie du moteur 1}}$$

$$EFFSTOCK = \frac{EFFNOX - EFFDENOX}{1 - EFFDENOX}$$

On définit aussi le taux de remplissage NS/NSC du pot 6 :

$$NS/NSC = \frac{\text{quantité de NOx adsorbée (NS)}}{\text{quantité maximale adsorbable (NSC)}}$$

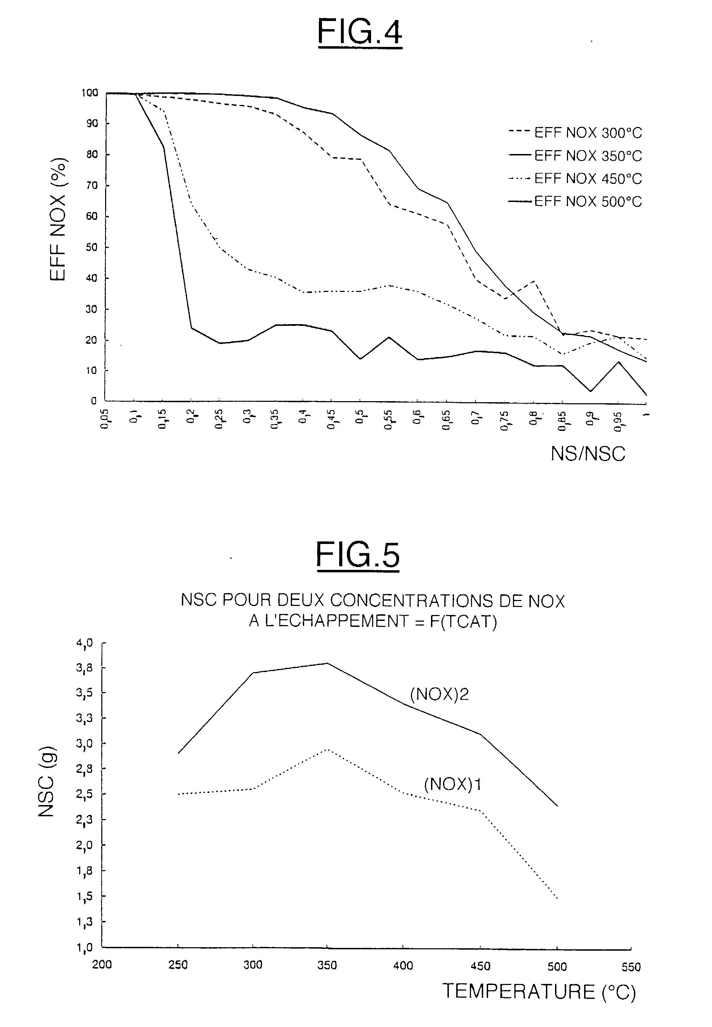

Des mesures opérées sur le moteur au banc ont permis de relever les variations de EFFNOX, EFFDENOX et NS en fonction de divers paramètres. EFFNOX est fonction de la température du pot 6, du taux de remplisssage NS/NSC, ainsi que, dans une moindre mesure, du débit du moteur en NOx. Les graphes de la figure 4 font apparaître des variations de EFFNOX en fonction de la température et du taux de remplissage.

On a représenté à la figure 5 l'allure des variations de NSC en fonction de la température du pot, pour deux valeurs de concentration $[NOx]_1$ et $[NOx]_2$ des oxydes d'azote dans les gaz sortant de la ligne d'échappement.

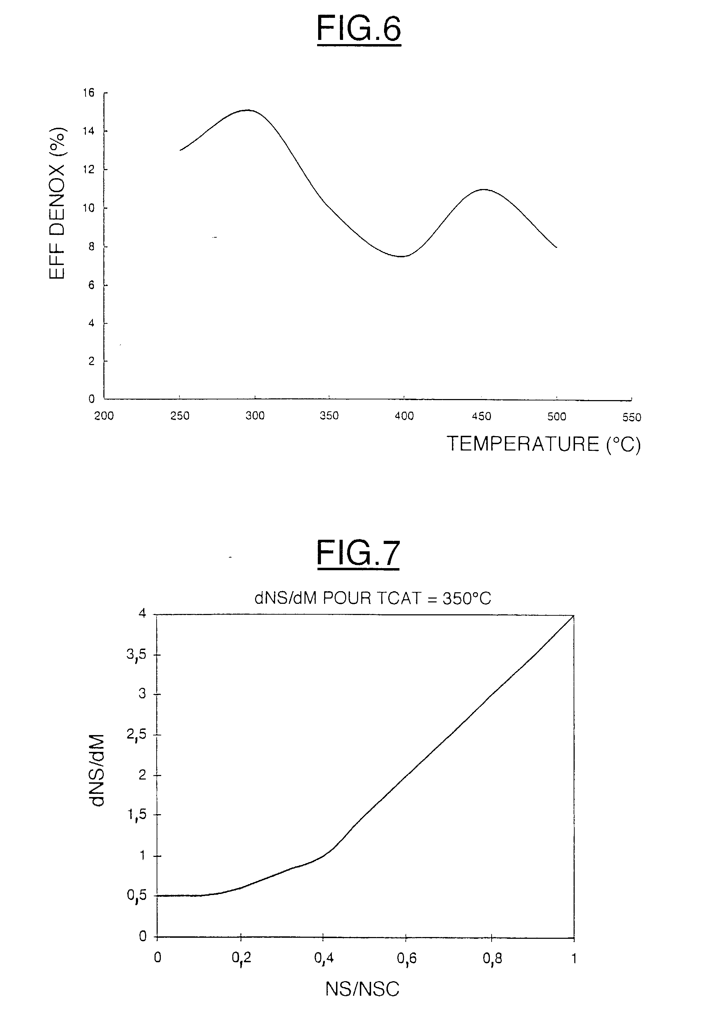

On a représenté à la figure 6 les variations de EFFDENOX en fonction de la température du pot.

On comprend que les divers graphes ci-dessus peuvent être mis en mémoire dans le calculateur 2 sous la forme de tables ou "cartographies", à une ou plusieurs entrées, la lecture de ces tables fournissant des valeurs des grandeurs et des variables prises en compte clans le modèle de fonctionnement, suivant l'invention, du pot 6 en stockage des NOx que l'on décrit ci-dessous.

Ce fonctionnement du pot 6 intervient lorsque le mélange air/carburant d'alimentation du moteur est pauvre, c'est-à-dire sous-stoechiométrique. Si $NS_i$ est la quantité d'oxyde d'azote adsorbée à l'instant d'échantillonnage i (correspondant par exemple, comme cela est classique, au passage au point mort haut $PMH_i$ d'un cylindre du moteur 1), on a :

$$NS_i = NS_{i-1} + DNSSTOCK \tag{1}$$

DNSSTOCK étant la quantité de NOx stockée entre les PMH d'ordre (i - 1) et i.

Suivant l'invention, on évalue DNSSTOCK par :

$$DNSSTOCK = [NOx] . (1 - EFFDENOX) . EFFSTOCK =$$

$$[NOx] . (EFFNOX . EFFDENOX) \tag{2}$$

où [NOx] est la concentration en NOx, soit le rapport de la masse de NOx produits par le moteur à la masse d'air admise à chaque combustion de ce moteur. Une cartographie (non représentée) permet d'évaluer cette masse de NOx à chaque combustion, en fonction du régime N et de la charge du moteur, avec application d'une correction fonction de la température de l'eau de refroidissement du moteur. La masse d'air est évaluée par le calculateur 2, de façon classique, à partir d'une mesure du débit ou de la pression de l'air au collecteur d'admission du moteur 1.

Les cartographies illustrées par les figures 4 et 6 fournissent les valeurs de EFFNOX et EFFDENOX à prendre en compte dans les calculs de DNSSTOCK, EFFNOX étant calculée à partir de la valeur de NS au pas précédent ($NS_{i-1}$). La cartographie de la figure 5 donne NSC. On connaît donc le rapport NS/NSC et la température $T_{cat}$ du pot, ce qui permet de tirer EFFNOX de la cartographie de la figure 4.

### Modèle de fonctionnement en déstockage et réduction des NOX

Suivant l'invention, ce déstockage et cette réduction interviennent lorsque le moteur est dans une condition de coupure d'allumage (par exemple une décélération) et la richesse du mélange air/carburant d'alimentation du moteur est supérieure ou égale à 1. Des mesures au banc ont permis d'établir le graphe de la figure 7, qui représente les variations du rapport dNS/dM de la quantité de NOx déstockée par une masse dM de réducteurs en fonction du remplissage NS/NSC du pot 6, pour une température de celui-ci égale à 350°C. Le graphe de la figure 7, et d'autres similaires correspondant à d'autres valeurs de la température, sont mis en mémoire dans le calculateur 2 sous la forme d'une cartographie, comme les graphes des figures 4 à 6.

Suivant l'invention, le déstockage intervient quand le moteur est dans une condition de coupure d'allumage et qu'on injecte du carburant de sorte que la richesse du mélange air/carburant dépasse une valeur de seuil RICPURGE, la quantité $NS_i$ de NOX restant stockée dans le pot au PMH d'ordre i étant décrémentée d'une quantité DNSPURGE correspondant à la quantité de NOX déstockée entre les PMH (i - 1) et i, soit :

$$NS_i = NS_{i-1} - DNSPURGE,$$

avec :

$$DNSPURGE+QNOXTRAP_i . dNS/dM,$$

où :

- dNS/dM est connue par la cartographie correspondant au graphe de la figure 7, et
- QNOXTRAP$_i$ est la masse de réduction reçue entre deux PMH d'ordre (i - 1) et i par le pot 6.

A cet égard, il faut remarquer que, lorsque la ligne d'échappement comporte, comme représenté à la figure 1, un pot catalytique d'amorçage 5 en avant du pot 6, les réducteurs qui sortent du moteur 1 sont soumis à une oxydation dans le pot 5 par l'oxygène stocké dans celui-ci. C'est seulement la quantité excédentaire, non oxydée par cet oxygène stocké dans le pot, qui pourra être utilisée dans le pot 6 pour déstocker ou réduire les NOx stockés. QNOXTRAP est donc égale à la masse de réducteurs QESS$_i$ débitée à l'échappement du moteur entre deux PMH d'ordre (i-1) et i lorsque le mélange air/carburant est non brûlé et que le pot catalytique d'amorçage 5 est vide d'oxygène, soit :

$$QESS_i = \frac{(RICONS_i - RICPURGE).DINJV_i.Cdébit}{RiCONS_i} \qquad (3)$$

où :

- RICONS$_i$ : richesse de consigne pendant la purge,
- RICPURGE : richesse du mélange air/carburant en dessous de laquelle il n'y a plus assez d'HC non brûlés (et de CO) dans les gaz d'échappement pour purger efficacement le pot 6,
- DINJV : temps d'ouverture d'un injecteur 6 de carburant dans le moteur 1,
- Cdébit : coefficient de mise à l'échelle.

Pendant une purge à la richesse RICONS$_i$ > RICPURGE, on a alors

$$QNOXTRAP_i = QESS_i$$

calculée par la formule (3) ci-dessus, et si le cumul MESS$_i$ au PMH$_i$ des quantités de réduction débitées dans le pot 6 depuis le débit de la purge est tel que :

$$MESSi = MESS_{i-1} + QESS_i > MESSLO$$

MESSLO étant une valeur de seuil de la quantité de réducteur nécessaire pour purger le catalyseur d'amorçage 5 de l'oxygène stocké dans ce catalyseur.

Si les conditions définies ci-dessus ne sont pas remplies, on a :

$$QNOXTRAP_i = O$$

$$MESSi = 0$$

Dans ce qui précède, l'influence des différents réducteurs (HC et CO) sur la réduction des NOx est mise en compte de manière globale à travers un débit de réducteur équivalent QNOXTRAP.

On va maintenant décrire la structure d'un système expert permettant de prendre des décisions quant à l'opportunité de déclencher un déstockage des NOx contenus dans le pot 6, soit un passage en mode dit "PURGE". Le système expert permet aussi de prendre une décision quant à l'opportunité d'arrêter une telle purge.

Description du système expert

Suivant une caractéristique de la présente invention, la prise d'une décision de déstockage fait intervenir :

- soit l'efficacité instantanée globale (EFFNOX) telle que définie ci-dessus,
- soit l'efficacité instantanée de stockage (EFFSTOCK) telle que :

$$EFFSTOCK = \frac{EFFNOX - EFFDENOX}{1 - EFFDENOX}$$

EFFDENOX étant définie ci-dessus, et
- une condition de coupure d'allumage (condition_coupure = on).

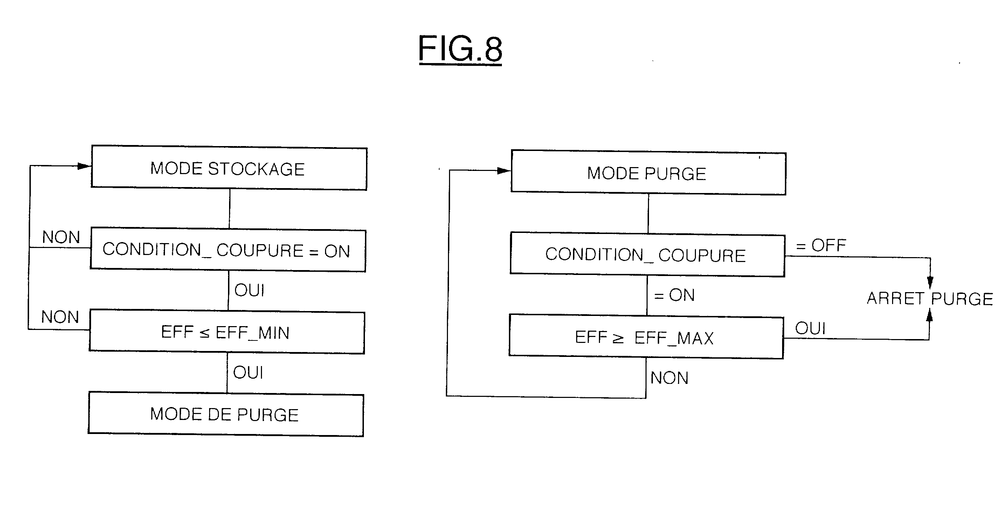

Chacune des deux grandeurs d'efficacité peut être prise en compte, soit par sa valeur instantanée, soit par sa valeur moyenne courante depuis la dernière purge.
Ces efficacités désignées de manière générale par EFF dans la suite de la description, peuvent servir à déclencher une purge.
On va maintenant décrire la structure et le fonctionnement du système expert intégré au procédé de commande de purge suivant l'invention, en liaison avec la figure 8 qui présente l'organigramme de ce système expert.
L'organigramme de la figure 8 illustre les conditions qui régissent les changements de la consigne de richesse du mélange air/carburant d'alimentation du moteur, en fonction des conditions qui déterminent un basculement du mode de fonctionnement du moteur entre deux modes : le mode "purge" et le mode "stockage". Ce sont les basculements entre l'un quelconque de ces modes qui sont gérés par le système expert. C'est ainsi que celui-ci gère le déclenchement et l'arrêt des phases de purge du pot catalytique.
Le pot catalytique 6 fonctionnant en mode stockage, le calculateur détermine si le moteur est en condition de coupure d'allumage, condition_coupure = on, et dans ce cas compare l'efficacité EFF du pot 6 à une valeur prédéterminée minimale Eff_min du pot 6 fonction de la température ($T_{cat}$) des moyens d'absorption catalytiques. Si EFF ≤ Eff_ min, le mode purge est alors déclenché par injection forcée de carburant sans allumage du mélange comme décrit prédédemment. Si les deux conditions ci-dessus ne sont pas réunies, le calculateur 2 ne déclenche pas le mode purge.
Lorsque le pot catalytique fonctionne en mode purge, le calculateur 2 détermine continûment si le moteur est en condition de coupure d'allumage ou non (condition_coupure = on ou condition_coupure = off) et arrête le mode purge dès la détection d'une condition_coupure = off. Simultanément, le calculateur 2 compare EFF du pot 6 à une valeur prédéterminée maximale Eff_max fonction de la température ($T_{cat}$) des moyens d'absorption catalytiques et si EFF ≥ Eff_max arrête également le mode purge.

**Revendications**

1. Procédé de commande de purge d'un pot catalytique (6) de traitement des gaz d'échappement d'un moteur à combustion interne (1), ledit pot comprenant des moyens d'adsorption catalytiques des oxydes d'azote contenus dans ces gaz, suivant lequel on déclenche une telle purge par un accroissement de la richesse (R) d'un mélange air/carburant par rapport à une richesse correspondant à un mélange pauvre ou stoechiométrique, caractérisé en ce que :

    (a) on détermine, lorsque le moteur fonctionne, si le moteur est en condition de coupure d'allumage (condition_coupure = on) ou en condition d'allumage (condition_coupure = off); et
    (b) on déclenche une purge du pot catalytique par le mélange air/carburant enrichi, sans combustion de celui-ci, quand le moteur est en condition de coupure d'allumage (condition_coupure = on).

2. Procédé selon la revendication 1, caractérisé en ce que :

    (c) on évalue à l'aide d'une table fonction de la température ($T_{cat}$) et du taux de remplissage (NS/NSC) des moyens d'adsorption catalytiques, l'efficacité (EFFNOX; EFFSTOCK) du pot en matière d'adsorption et réduction des oxydes d'azote lorsque le moteur fonctionne; et
    (d) on déclenche la purge du pot quand simultanément ladite efficacité (EFFNOX; EFFSTOCK) tombe en dessous d'une valeur prédéterminée (Eff_min), fonction de la température ($T_{cat}$) des moyens d'adsorption catalytiques et que le moteur est en condition de coupure d'allumage (condition_coupure = on).

3. Procédé selon la revendication 2, caractérisé en ce qu'on arrête ladite purge quand l'efficacité (EFFNOX; EFFSTOCK) est supérieure à une valeur prédéterminée (Eff_max) fonction de la température ($T_{cat}$) des moyens d'adsorption catalytiques.

4. Procédé selon la revendication 2, caractérisé en ce qu'on évalue le taux de remplissage (NS, NSC) des moyens d'adsorption en oxydes d'azote, à partir d'une évaluation de la quantité courante (NS) d'oxydes d'azote stockée pendant une phase de fonctionnement du moteur en mélange pauvre, et on tire ledit taux (NS, NSC) de cette évaluation et d'une table (figure 5) donnant la quantité maximale (NSC) d'oxydes d'azote adsorbable par les moyens d'adsorption, en fonction de la température ($T_{cat}$) desdits moyens et de la quantité courante en oxydes d'azote des gaz d'échappement du moteur.

5. Procédé conforme à la revendication 4, caractérisé en ce que, pour l'évaluation de la quantité courante (NS) d'oxydes d'azote stockée, on prend en compte le rapport (EFFDENOX) entre le débit d'oxydes d'azote traité par les moyens d'adsorption et le débit des oxydes d'azote sortis du moteur, ledit rapport étant tiré d'une table (figure 6) fonction de la température ($T_{cat}$) des moyens d'adsorption.

6. Procédé conforme à la revendication 5, caractérisé en ce que, pendant une purge, on évalue continûment des décréments d'oxydes d'azote (DNSPURGE) déstockés successivement dans les moyens d'adsorption et en ce qu'on arrête la purge quand l'efficacité (EFFNOX; EFFSTOCK) du pot (6) remonte au-dessus de ladite valeur de seuil (Eff_ max) prédéterminée du fait desdits déstockages successifs.

7. Procédé conforme à l'une quelconque des revendications 1 à 6, caractérisé en ce que ladite efficacité (EFFNOX) du pot est mesurée par le rapport du débit des oxydes d'azote à la sortie d'une ligne d'échappement ($4_1$, $4_2$) du moteur (1) du débit desdits oxydes d'azote à la sortie du moteur (1).

8. Procédé selon l'une quelconque des revendications 1 à 7, caractérisé en ce qu'on arrête la purge quand le moteur est en condition d'allumage (condition_coupure = off).

9. Procédé selon l'une quelconque des revendications 1 à 8, caractérisé en ce que le mélange air/carburant enrichi est obtenu par injection forcée de carburant.

10. Procédé selon la revendication 9, caractérisé en ce que le moteur est un moteur à injection indirecte et l'enrichissement du mélange se fait dans la chambre de combustion.

11. Procédé selon la revendication 9, caractérisé en ce que le moteur est un moteur à injection directe et l'enrichissement du mélange se fait dans la chambre de combustion ou dans l'échappement.

12. Utilisation du procédé conforme à l'une quelconque des revendications 1 à 11, à la commande de la purge d'un pot catalytique (6) de traitement d'un moteur (1) à combustion interne propulsant un véhicule automobile.

## FIG.1

# FIG.2

MASSE

OXYGENE

ESSENCE

RICHESSE

# FIG.3

| NOX REJETES A L'ECHAPPEMENT | NOX MOTEUR |
| NOX REDUIT EN MELANGE PAUVRE | |
| NOX STOCKE | |

# FIG.4

# FIG.5

NSC POUR DEUX CONCENTRATIONS DE NOX
A L'ECHAPPEMENT = F(TCAT)

# FIG.6

# FIG.7

dNS/dM POUR TCAT = 350°C

## FIG.8

MODE PURGE

CONDITION_ COUPURE = OFF

EFF ≥ EFF_MAX = ON

NON

OUI

ARRET PURGE

MODE STOCKAGE

CONDITION_ COUPURE = ON

NON

OUI

EFF ≤ EFF_MIN

NON

OUI

MODE DE PURGE

**Office européen des brevets**

# RAPPORT DE RECHERCHE EUROPEENNE

Numéro de la demande

EP 99 20 0098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | EP 0 869 267 A (TOYOTA MOTOR CO LTD) 7 octobre 1998 * colonne 15, ligne 3 - ligne 39; figures 1,12 * | 1,8-12 | F02D41/02 F01N3/08 |
| X<br>Y | US 5 595 060 A (TOGAI KAZUHIDE ET AL) 21 janvier 1997 * colonne 10, ligne 17 - colonne 19, ligne 40; figures * | 1,7-9,12<br>2,3 | |
| Y | US 5 450 722 A (KATOH KENJI ET AL) 19 septembre 1995 * colonne 9, ligne 13 - colonne 11, ligne 16; figures 1-14 * | 2,3 | |
| A | PATENT ABSTRACTS OF JAPAN vol. 018, no. 389 (M-1642), 21 juillet 1994 & JP 06 108824 A (TOYOTA MOTOR CORP), 19 avril 1994 * abrégé * | 1 | |
| D,A | EP 0 598 917 A (TOYOTA MOTOR CO LTD) 1 juin 1994 | | |

**DOMAINES TECHNIQUES RECHERCHES (Int.Cl.6)**

F01N
F02D

Le présent rapport a été établi pour toutes les revendications

| Lieu de la recherche | Date d'achèvement de la recherche | Examinateur |
|---|---|---|
| LA HAYE | 26 avril 1999 | Sideris, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 931 923 A1

## ANNEXE AU RAPPORT DE RECHERCHE EUROPEENNE
## RELATIF A LA DEMANDE DE BREVET EUROPEEN NO.

EP 99 20 0098

26-04-1999

| Document brevet cité au rapport de recherche | | | Date de publication | Membre(s) de la famille de brevet(s) | | | Date de publication |
|---|---|---|---|---|---|---|---|
| EP | 0869267 | A | 07-10-1998 | JP | 10280987 | A | 20-10-1998 |
| US | 5595060 | A | 21-01-1997 | JP | 7305644 | A | 21-11-1995 |
| | | | | JP | 7310534 | A | 28-11-1995 |
| | | | | JP | 8121147 | A | 14-05-1996 |
| | | | | DE | 19517168 | A | 23-11-1995 |
| | | | | KR | 150432 | B | 01-10-1998 |
| US | 5450722 | A | 19-09-1995 | JP | 2722951 | B | 09-03-1998 |
| | | | | JP | 6010725 | A | 18-01-1994 |
| | | | | EP | 0598916 | A | 01-06-1994 |
| | | | | EP | 0598917 | A | 01-06-1994 |
| | | | | WO | 9325805 | A | 23-12-1993 |
| | | | | WO | 9325806 | A | 23-12-1993 |
| | | | | JP | 2586739 | B | 05-03-1997 |
| | | | | US | 5437153 | A | 01-08-1995 |
| EP | 0598917 | A | 01-06-1994 | US | 5437153 | A | 01-08-1995 |
| | | | | EP | 0598916 | A | 01-06-1994 |
| | | | | WO | 9325805 | A | 23-12-1993 |
| | | | | WO | 9325806 | A | 23-12-1993 |
| | | | | JP | 2586739 | B | 05-03-1997 |
| | | | | US | 5450722 | A | 19-09-1995 |

EPO FORM P0460